# EUROPÄISCHE PATENTANMELDUNG

(11) **EP 1 658 927 A2**
(43) Veröffentlichungstag der Anmeldung: **24.05.2006**
(21) Anmeldenummer: 05023822.9
(22) Anmeldetag: 02.11.2005
(51) Int. Cl.: B23P 19/10, F16F 15/131, G01M 1/30, F16D 13/00

(54) **Verfahren zum Montieren einer Kupplungsanordnung an einem Schwungrad in einem Antriebsstrang eines Fahrzeuges und Montageanordnung zum axialen Montieren einer gewuchteten Kupplungsanordung an einem gewuchteten Schwungrad**

(30) Priorität: 20.11.2004 DE 102004056083
(71) Anmelder: LuK Lamellen und Kupplungsbau Beteiligungs KG, 77815 Bühl (DE)
(72) Erfinder: Mih, Philippe, 67760 Gambsheim (DE); Ruggiero, Maik, 77815 Bühl (DE)

(57) **Zusammenfassung**

Es wird ein Verfahren zum Montieren einer Kupplungsanordnung an einem Schwungrad (1) in einem Antriebsstrang eines Fahrzeuges vorgeschlagen, wobei das Schwungrad (1) und die Kupplungsanordnung vor der Montage jeweils separat gewuchtet werden und wobei das Schwungrad (1) und die Kupplungsanordnung in Bezug auf die jeweils ermittelte Unwucht mittels einer Ausrichteinrichtung zentriert und in Umfangsrichtung zueinander ausgerichtet werden. Ferner wird eine Montageanordnung zum axialen Montieren einer gewuchteten Kupplungsanordnung an einem gewuchteten Schwungrad in einem Antriebsstrang eines Fahrzeuges vorgeschlagen, wobei zumindest eine Ausrichteinrichtung zum Ausrichten der Kupplungsanordnung an dem Schwungrad vorgesehen ist und wobei die Ausrichteinrichtung zumindest einen Satz Vorsprünge und zumindest zwei jeweils korrespondierende Sätze von Ausnehmungen aufweist.

## Beschreibung

Die vorliegende Erfindung betrifft ein Verfahren zum Montieren einer Kupplungsanordnung an einem Schwungrad in einem Antriebsstrang eines Fahrzeuges. Ferner betrifft die vorliegende Erfindung eine Montageanordnung zum axialen Montieren einer gewuchteten Kupplungsanordnung an einem gewuchteten Schwungrad in einem Antriebsstrang eines Fahrzeuges, wobei zumindest eine Ausrichteinrichtung zum Ausrichten der Kupplungsanordnung an dem Schwungrad vorgesehen ist.

Aus der Fahrzeugtechnik sind derartige Verfahren zum Montieren einer Kupplungsanordnung an einem Schwungrad im Antriebsstrang eines Fahrzeuges sowie eine Montageanordnung zum axialen Montieren einer gewuchteten Kupplungsanordnung an einem gewuchteten Schwungrad im Antriebsstrang eines Fahrzeuges bekannt.

Nachteilig bei dem bekannten Verfahren und bei der bekannten Montageanordnung ist es, dass bei der Endmontage des Fahrzeuges, welche üblicherweise im Fahrzeugwerk durchgeführt wird, eine Restunwucht an den montierten Bauteilen im Antriebsstrang des Fahrzeuges auftritt. Dies kann insbesondere bei Motoren, die bei höheren Drehzahlen betrieben werden können, nachteilig sein.

Der vorliegenden Erfindung liegt die Aufgabe zugrunde, ein Verfahren der eingangs genannten Gattung und eine Montageanordnung der eingangs genannten Gattung vorzuschlagen, welche es ermöglichen, eine Restunwucht nach der Montage der Bauteile idealerweise zu vermeiden bzw. auf ein Minimum zu reduzieren.

Diese Aufgabe wird bezüglich des Verfahrens dadurch gelöst, dass bei dem Verfahren zum Montieren einer Kupplungsanordnung an einem Schwungrad in einem Antriebsstrang eines Fahrzeuges das Schwungrad und die Kupplungsanordnung vor der Montage jeweils separat gewuchtet werden, wobei das Schwungrad und die Kupplungsanordnung in Bezug auf die jeweils ermittelte Unwucht mittels einer Ausrichteinrichtung zentriert und in Umfangsrichtung zueinander ausgerichtet werden.

Mit dem erfindungsgemäßen Verfahren kann somit ein optimales Auswuchten auch nach einer im Fahrzeugwerk später durchgeführten Endmontage ermöglicht werden, sodass auch bei höheren Drehzahlen, wie sie z. B. bei Sportmotoren erreicht werden, Unwuchten nach der Montage der Kupplungsanordnung an dem Schwungrad vermieden werden.

Gemäß einer Weiterbildung der vorliegenden Erfindung kann vorgesehen sein, dass die jeweils ermittelte Unwucht an dem Schwungrad und an der Kupplungsanordnung, z. B. visuell oder dergleichen an dem Deckel der Kupplungsanordnung markiert wird, wobei die Markierungen derart zueinander ausgerichtet werden, dass nach der Montage eine mögliche Restwucht an den zusammengebauten Bauteilen zumindest reduziert wird. Die Art der Markierung kann beliebig ausgewählt werden.

Beispielsweise kann vorgesehen sein, dass an dem Deckel der Kupplungsanordnung eine der ermittelten Unwuchtposition gegenüberliegende Position und an dem Schwungrad die ermittelte Unwuchtposition direkt markiert wird. Somit können die vorgesehenen Markierungen bei der Montage deckungsgleich zueinander ausgerichtet werden, sodass jeweils die eine Unwucht die jeweils andere Unwucht an dem anderen Bauteil reduziert. Es sind aber auch andere Positionen der Markierungen denkbar.

Um die ermittelte Position der Kupplungsanordnung entsprechend an dem Schwungrad bei der Montage auszurichten, kann gemäß einer weiteren Ausgestaltung vorgesehen sein, dass durch die Ausrichteinrichtung mehrere über den Umfang des Deckels der Kupplungsanordnung und des Schwungrades verteilte Befestigungspositionen vorgesehen werden, sodass die Kupplungsanordnung an dem Schwungrad bei der Montage an den jeweiligen Markierungen ausgerichtet werden kann.

Besonders vorteilhaft ist es, wenn als Ausrichteinrichtung zumindest ein Satz Vorsprünge und zumindest zwei jeweils korrespondierende Sätze von Ausnehmungen oder dergleichen verwendet werden. Dabei können die Vorsprünge und die Ausnehmungen an dem Schwungrad und/oder an dem Deckel der Kupplungsanordnung angeordnet werden. Somit kann je nach Ausführungsform ein Ausrichten der Bauteile bei der Montage an einer vorbestimmten Position realisiert werden. Zusätzlich kann auch eine Zentrierungsfunktion zwischen dem Schwungrad und der Kupplungsanordnung des Fahrzeuges realisiert werden.

Insgesamt ist bei dem erfindungsgemäßen Verfahren vorgesehen, dass die ermittelte Unwucht des Schwungrades und die ermittelte Unwucht der Kupplungsanordnung in Bezug aufeinander in einer derartigen relativen Winkellage montiert werden, dass die Gesamtunwucht unter Berücksichtigung der verschiedenen winkelmäßigen Verschraubungspositionen minimiert wird.

Die der Erfindung zugrunde liegende Aufgabe wird auch durch eine Montageanordnung zum axialen Montieren einer gewuchteten Kupplungsanordnung an einem gewuchteten Schwungrad in einem Antriebsstrang eines Fahrzeuges gelöst, wobei zumindest eine Ausrichteinrichtung zum Ausrichten der Kupplungsanordnung an dem Schwungrad vorgesehen ist und wobei die Ausrichteinrichtung zumindest einen Satz Vorsprünge und zumindest zwei jeweils korrespondierende Sätze von Ausnehmungen aufweist.

Mit der erfindungsgemäßen Montageanordnung kann eine nahezu unwuchtfreie Anordnung nach der Montage der vorher gewuchteten Bauteile realisiert werden, indem die winkelmäßigen Montagemöglichkeiten der Kupplungsanordnung an dem Schwungrad in Umfangsrichtung erweitert werden. Insbesondere bei Sportmotoren, welche besonders hohe Drehzahlen erreichen, ist diese Montageanordnung besonders vorteilhaft. Vorzugsweise kann das vorgeschlagene Verfahren bei der erfindungsgemäßen Montageanordnung durchgeführt werden.

Bei der erfindungsgemäß vorgesehenen Montageanordnung können die Ausnehmungen der Ausrichteinrichtung in vielen verschiedenen Anordnungsmöglichkeiten in den Vorsprüngen arretiert werden, sodass eine gewünschte Position des Schwungrades z. B. an dem Deckel der Kupplungsanordnung zum Ausgleichen der jeweiligen Unwuchten der Einzelteile ermöglicht wird.

Vorzugsweise kann z. B. vorgesehen sein, dass ein Satz drei Vorsprünge an dem Schwungrad und zwei Sätze sechs Ausnehmungen an dem Deckel der Kupplungsanordnung umfassen. Bei dieser speziellen Ausführungsform können sechs verschiedene Anordnungspositionen zwischen dem Schwungrad und der Kupplungsanordnung realisiert werden. Es ist auch möglich, dass weitere Positionen realisiert werden, indem die Anzahl der verwendeten Ausnehmungen und der Vorsprünge variiert wird. Es ist auch denkbar, dass die Ausnehmungen an dem Schwungrad und die Vorsprünge an dem Deckel der Kupplungsanordnung vorgesehen sind.

Besonders vorteilhaft ist es, wenn als Vorsprung ein Passstift oder dergleichen verwendet wird. Durch die Verwendung eines Passstiftes kann neben der Ausrichtung zum Ausgleichen einer vorliegenden Unwucht auch eine Zentrierung erfolgen. Die Zentrierung kann jedoch auch durch andere konstruktive Ausgestaltungen an den Bauteilen selbst, wie z. B. mit Durchmesserabstufungen oder dergleichen, erfolgen.

Gemäß einer Weiterbildung der vorliegenden Erfindung kann bei der erfindungsgemäßen Montageanordnung als Ausnehmung eine Öffnung zum Einführen des korrespondierenden Passstiftes vorgesehen sein, wobei die Querschnittsform der Öffnung an die Querschnittsform des jeweiligen Passstiftes angepasst ist. Somit wird eine formschlüssige Verbindung zwischen dem Passstift und der Öffnung ermöglicht. Als Querschnittsformen kann jede beliebige Form verwendet werden, besonders vorteilhaft ist die Verwendung von runden, ovalen, eckigen oder dergleichen Querschnittsformen.

Zum axialen Befestigen der Kupplungsanordnung an dem Schwungrad bei der erfindungsgemäßen Montageanordnung können mehrere über den Umfang verteilt angeordnete Verschraubungen oder dergleichen verwendet werden. Es sind auch andere Befestigungsmöglichkeiten denkbar. Jedoch ist darauf zu achten, dass die Anzahl der Verschraubungen größer gleich der Anzahl der Ausnehmungen an dem jeweiligen Bauteil sein sollte. Auf diese Weise wird sichergestellt, dass für die jeweils durch eine Ausnehmung realisierte Anordnungsmöglichkeit auch eine Befestigungsmöglichkeit geschaffen wird.

Bei der erfindungsgemäßen Montageanordnung kann vorzugsweise das Schwungrad ein Zweimassenschwungrad eines Torsionsschwingungsdämpfers sein, der im Wesentlichen wenigstens zwei verdrehbar zueinander gelagerten Schwungmassen umfasst, die über eine Dämpfungseinrichtung gekoppelt sind. Der Einsatz der Montageanordnung kann jedoch auch für andere Bauteile verwendet werden.

Vorteilhafte Ausgestaltungen ergeben sich insbesondere aus den jeweils vorgesehenen Unteransprüchen. Nachfolgend wird die vorliegende Erfindung anhand der dazugehörigen Zeichnungen näher erläutert. Es zeigen:
- Figur 1: eine Prinzipdarstellung eines Deckels einer Kupplungsanordnung einer erfindungsgemäßen Montageanordnung mit mehreren Ausnehmungen und Verschraubungen;
- Figur 2: eine Prinzipansicht eines Schwungrades mit mehreren Passstiften und Verschraubungen der erfindungsgemäßen Montageanordnung;
- Figur 3: eine Prinzipansicht gemäß Figur 1 mit einer einer ermittelten Unwuchtposition gegenüberliegenden Markierung an dem Deckel der Kupplungsanordnung;
- Figur 4: eine Prinzipansicht des Schwungrades mit daran montierter Kupplungsanordnung mit nahezu deckungsgleichen Markierungen; und
- Figur 5: eine dreidimensionale Ansicht des Deckels der Kupplungsanordnung mit sechs Ausnehmungen.

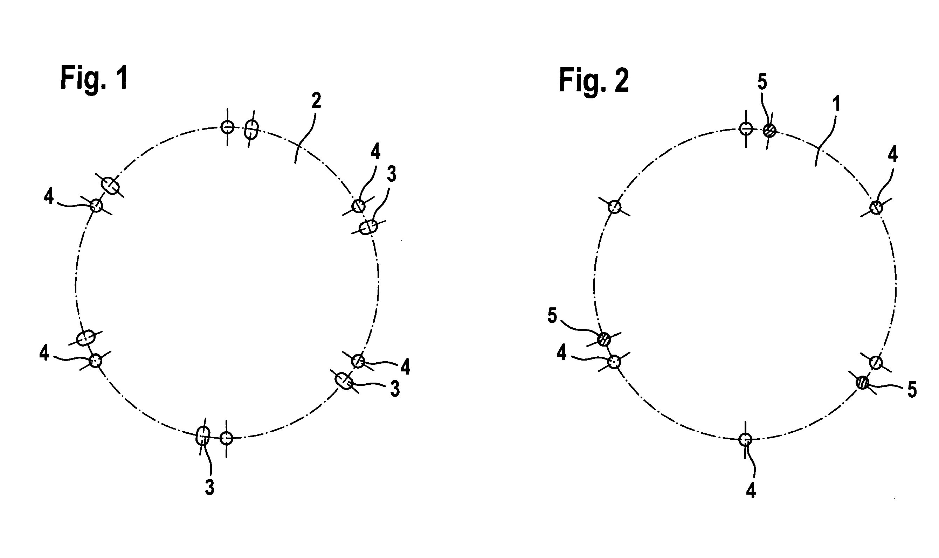

In den Figuren 1 bis 5 ist eine mögliche Ausführungsform einer erfindungsgemäßen Montageanordnung zum axialen Montieren einer gewuchteten Kupplungsanordnung an einem üblicherweise an der Kurbelwelle des Motors des Fahrzeuges vormontierten und gewuchteten Schwungrad 1 dargestellt.

Figur 1 zeigt eine Prinzipansicht eines Deckels 2 der Kupplungsanordnung. An dem Deckel 2 sind über den Umfang verteilt zwei Sätze mit insgesamt sechs Ausnehmungen vorgesehen, welche bei dieser Ausführungsform als Langlöcher 3 ausgebildet sind. Neben jedem Langloch 3 ist eine Verschraubung 4 zum axialen Befestigen des Deckels 2 an dem Schwungrad 1 vorgesehen.

In Figur 2 ist das als Teil eines Torsionsschwingungsdämpfers ausgebildete Schwungrad 1 gezeigt. Das Schwungrad 1 weist über den Umfang verteilt einen Satz Vorsprünge auf, welche als Passstifte 5 ausgebildet sind. Ferner sind deckungsgleich mit dem Deckel 2 die Verschraubungen 4 über den Umfang des Schwungrades 1 angeordnet.

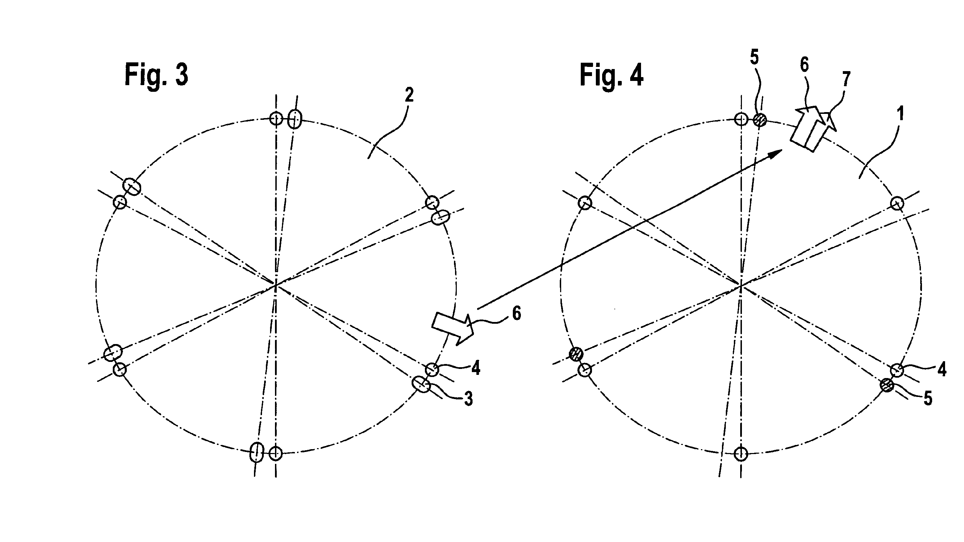

Figur 3 zeigt den Deckel 2 der Kupplungsanordnung prinzipmäßig wie in Figur 1, jedoch mit dem Unterschied, dass in Figur 3 eine der ermittelten Unwuchtposition gegenüberliegende Position mit einer Markierung 6 markiert ist, welche als Pfeil in Figur 3 angedeutet ist.

In Figur 4 ist prinzipmäßig der zusammengebaute Zustand des Deckels 2 und des Schwungrades 1 gezeigt. Die Kupplungsanordnung ist mit ihrem Deckel 2 mit Hilfe der in den entsprechenden Langlöchern 3 aufgenommenen Passstifte 5 an dem Schwungrad 1 ausgerichtet. Zum Befestigen werden die über den Umfang verteilt angeordnete Verschraubungen 4 verwendet. Auch an dem Schwungrad 1 ist eine Markierung 7 durch einen Pfeil angedeutet, welcher die Position der ermittelten Unwucht markiert. Im zusammengebauten Zustand sind die beiden Markierungen 6, 7 beinahe deckungsgleich zueinander angeordnet, sodass die jeweils an dem Deckel 2 und an dem Schwungrad 1 vorgesehene Unwucht minimiert wird.

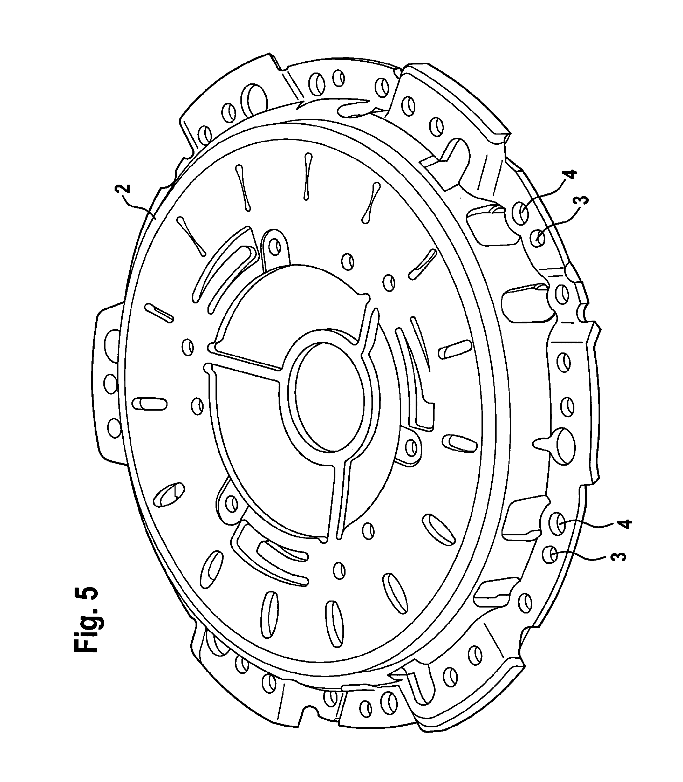

Figur 5 zeigt eine dreidimensionale Ansicht des Deckels 2 der Kupplungsanordnung, wobei die Langlöcher 3 an dem äußeren Rand des Deckels 2 vorgesehen sind. Ferner sind die Verschraubungen 4 über den Umfang verteilt angedeutet.

### Bezugszeichenliste

- 1: Schwungrad
- 2: Deckel
- 3: Langloch
- 4: Verschraubung
- 5: Passstift
- 6: Markierung an dem Deckel
- 7: Markierung an dem Schwungrad

## Patentansprüche

1. Verfahren zum Montieren einer Kupplungsanordnung an einem Schwungrad in einem Antriebsstrang eines Fahrzeuges, **dadurch gekennzeichnet, dass** das Schwungrad (1) und die Kupplungsanordnung vor der Montage jeweils separat gewuchtet werden, wobei das Schwungrad (1) und die Kupplungsanordnung in Bezug auf die jeweils ermittelte Unwucht mittels einer Ausrichteinrichtung zentriert und in Umfangsrichtung zueinander ausgerichtet werden.

2. Verfahren nach Anspruch 1, **dadurch gekennzeichnet, dass** die jeweils ermittelte Unwucht an dem Schwungrad (1) und an der Kupplungsanordnung markiert wird, wobei die Markierungen (6, 7) derart zueinander ausgerichtet werden, dass die ermittelten Unwuchten nach der Montage zumindest minimiert werden.

3. Verfahren nach Anspruch 1 oder 2, **dadurch gekennzeichnet, dass** an einem Deckel (2) der Kupplungsanordnung eine der ermittelten Unwuchtposition gegenüberliegende Position und an dem Schwungrad (1) die ermittelte Unwuchtposition markiert werden.

4. Verfahren nach Anspruch 3, **dadurch gekennzeichnet, dass** durch die Ausrichteinrichtung mehrere über den Umfang des Deckels (2) der Kupplungsanordnung und des Schwungrades (1) verteilte Befestigungspositionen vorgesehen werden, sodass die Kupplungsanordnung an dem Schwungrad (1) bei der Montage in verschiedenen Winkellagen in Umfangsrichtung an den jeweiligen Markierungen (6, 7) ausrichtet und befestigt werden.

5. Verfahren nach Anspruch 4, **dadurch gekennzeichnet, dass** als Ausrichteinrichtung zumindest ein Satz Vorsprünge und zumindest zwei jeweils korrespondierende Sätze von Ausnehmungen verwendet werden.

6. Montageanordnung zum axialen Montieren einer gewuchteten Kupplungsanordnung an einem gewuchteten Schwungrad in einem Antriebsstrang eines Fahrzeuges, wobei zumindest eine Ausrichteinrichtung zum Ausrichten der Kupplungsanordnung an dem Schwungrad vorgesehen ist, **dadurch gekennzeichnet, dass** die Ausrichteinrichtung zumindest einen Satz Vorsprünge und zumindest zwei jeweils korrespondierende Sätze von Ausnehmungen aufweist.

7. Montageanordnung nach Anspruch 6, **dadurch gekennzeichnet, dass** ein Satz drei Vorsprünge umfasst, welche über den Umfang verteilt an dem Schwungrad (1) vorgesehen sind.

8. Montageanordnung nach Anspruch 6 oder 7, **dadurch gekennzeichnet, dass** ein Satz drei Ausnehmungen umfasst, welche über den Umfang verteilt an einem Deckel (2) der Kupplungsanordnung vorgesehen sind.

9. Montageanordnung nach einem der Ansprüche 6 bis 8, **dadurch gekennzeichnet, dass** als Vorsprung ein Passstift (5) vorgesehen ist.

10. Montageanordnung nach einem der Ansprüche 6 bis 9, **dadurch gekennzeichnet, dass** als Ausnehmung eine Öffnung zum Einführen des korrespondierenden Passstiftes (5) vorgesehen ist, wobei die Querschnittsform der Öffnung an die Querschnittsform des jeweiligen Passstiftes (5) angepasst ist.

11. Montageanordnung nach Anspruch 10, **dadurch gekennzeichnet, dass** als Querschnittsformen runde, ovale oder eckige Querschnittsformen vorgesehen sind.

12. Montageanordnung nach einem der vorangehenden Ansprüche, **dadurch gekennzeichnet, dass** mehrere über den Umfang verteilt angeordnete Verschraubungen (4) zum axialen Verbinden des Schwungrades (1) und des Deckels (2) der Kupplungsanordnung vorgesehen sind, wobei die Anzahl der Verschraubungen (4) größergleich der Anzahl der Ausnehmungen eines Satzes ist.
